# FASCICULE DE BREVET EUROPEEN

(11) **EP 3 745 018 B1**
(45) Date de publication et mention de la délivrance du brevet: **11.05.2022**
(21) Numéro de dépôt: 20186824.7
(22) Date de dépôt: 10.09.2018
(51) Int. Cl.: F21S 43/50, F21S 41/50, F21S 41/43

(54) **DISPOSITIF LUMINEUX POUR L'ÉCLAIRAGE DE LA ROUTE, LA SIGNALISATION OU L'ÉCLAIRAGE INTÉRIEUR**
LEUCHTVORRICHTUNG FÜR DIE FAHRBAHNBELEUCHTUNG, ZUR SIGNALISIERUNG ODER INNENBELEUCHTUNG
LIGHT-EMITTING DEVICE FOR ROAD LIGHTING, SIGNALLING OR INTERIOR LIGHTING

(30) Priorité: 12.09.2017 FR 1758440
(43) Date de publication de la demande: 02.12.2020
(62) Demande divisionnaire de: 18193453.0
(73) Titulaire: Valeo Vision, 93012 Bobigny Cedex (FR)
(72) Inventeur: COLOMBEL, Jean-Marc, 49000 ANGERS (FR); PATRIZI, Stéphane, 49000 ANGERS (FR); GRATECAP, François, 49000 ANGERS (FR)
(74) Mandataire: Valeo Visibility

(56) Documents cités:
- EP-A1- 1 916 471
- EP-A2- 1 113 217
- BE-A- 489 618
- FR-A1- 2 927 404
- US-A1- 2003 012 030

## Description

L'invention se rapporte au domaine des dispositifs lumineux d'éclairage de la route et/ou de signalisation, ou d'éclairage intérieur pour véhicule automobile. Plus particulièrement, la présente invention a trait à un dispositif lumineux dont l'aspect lorsqu'il est éteint, encore appelé aspect éteint, est différent de l'aspect lorsqu'il est allumé, encore appelé aspect allumé.

Dans le domaine de l'éclairage des véhicules automobiles, les fabricants cherchent non seulement à perfectionner la fonction d'éclairage et/ou de signalisation des dispositifs lumineux mais aussi à ajouter d'autres particularités techniques et/ou esthétiques à ceux-ci afin de donner une entière satisfaction aux utilisateurs du véhicule.

Parmi ces particularités, les fabricants ont ajouté une technologie dite « fantôme », ou couramment appelé « Ghost effect » en anglais, dans les dispositifs lumineux. Cette technologie consiste à donner un aspect éteint différent de l'aspect allumé inattendu au dispositif lumineux. Par exemple, lorsque le dispositif lumineux est éteint, il peut présenter un aspect noir brillant brut qui donne l'impression à l'utilisateur que lorsque le dispositif est allumé, on obtient un flux de lumière uniforme. Toutefois, quand on allume le dispositif lumineux, un motif lumineux apparaît. Ce motif peut être purement décoratif, comporter un logo du fabricant, ou encore une fonction de signalisation, telle qu'un feu de position nocturne.

Il existe différentes solutions permettant de réaliser un « effet fantôme ». Toutefois ces solutions restent perfectibles.

Par exemple, le document EP1916471A1 divulgue un ensemble de lampe à effet tridimensionnel.

A cet effet, l'invention concerne un dispositif lumineux de véhicule automobile comprenant :
- une pièce de segmentation comportant plusieurs cavités traversantes ;
- plusieurs sources de lumière en amont de la pièce de segmentation ;
- un masque obturant au moins une cavité traversante de la pièce de segmentation, ledit masque étant apte à être traversé partiellement par la lumière et comportant au moins une zone ajourée.

Le masque et la pièce de segmentation sont agencés l'un par rapport à l'autre de manière à ce que la zone ajourée soit disposée en face d'au moins une cavité traversante.

En outre, le dispositif lumineux est agencé de manière à ce que chaque cavité reçoive directement ou indirectement la lumière d'au moins une source de lumière distincte. Autrement dit, chaque source de lumière émet de la lumière vers une seule cavité correspondante.

Ainsi, en état éteint du dispositif lumineux, les cavités obturées par le masque paraissent comme des zones inactives, c'est-à-dire des zones dont on s'attend à ce qu'elle garde le même aspect lorsque le dispositif lumineux est allumé. Toutefois, étant donné la particularité du masque, en état allumé du dispositif lumineux, les cavités obturées deviennent des zones lumineuses de manière inattendue. Ainsi, l'aspect allumé du dispositif lumineux est différent de son aspect éteint. Le dispositif lumineux selon l'invention présente bel et bien un effet dit « Ghost Effect ».

De manière optionnelle, l'intensité de la lumière traversant les cavités obturées peut être inférieure à celle des cavités non-obturées. Ainsi, on aperçoit différentes intensités de lumière sur l'ensemble de la surface d'éclairage du dispositif lumineux.

Par ailleurs, les cavités traversées par les rayons lumineux permettent d'améliorer la perception des bords des cavités, donc la forme de celles-ci.

Le dispositif lumineux selon l'invention peut optionnellement présenter une ou plusieurs des caractéristiques suivantes :
- le masque est réalisé à partir d'un matériau diffusant et translucide ; par définition, un matériau translucide est un matériau qui laisse passer de la lumière mais il ne permet pas de distinguer nettement l'objet vu à travers ce matériau ;
- alternativement à l'alinéa précédemment, le masque peut être seulement translucide ;
- le masque est réalisé à partir d'un matériau laissant passer de 5% à 20% de la lumière qui l'atteint;
- un élément transparent laissant passer un pourcentage de lumière, supérieur à celui du masque, est monté sur le masque et couvre la zone ajourée du masque ; par définition, un élément « transparent » est un élément qui laisse passer la lumière et permet de distinguer clairement la forme de l'objet vu à travers cet élément ; à titre d'exemple, l'élément transparent peut être des pièces réalisées en polyméthacrylate de méthyle (PMMA) ; on peut ajouter des additifs colorants pour donner une couleur à l'élément transparent pour une raison esthétique ;
- chaque cavité traversante est agencée en vis-à-vis d'au moins une source de lumière distincte ; ainsi, on n'a pas besoin de mettre en place des systèmes, notamment des guides de lumière, complexes pour amener la lumière jusqu'aux cavités traversantes ;
- la pièce de segmentation et le masque sont espacés l'un de l'autre ;
- l'espace entre la pièce de segmentation et le masque est comprise entre 1,5 mm et 2,5 mm ; il s'agit d'une fourchette de valeurs optimales mais non limitatives permettant d'éviter la fuite de lumière entre la pièce de segmentation et le masque ;
- la pièce de segmentation est couverte d'un revêtement ; le revêtement peut avoir pour but de protéger la pièce des égratignures, d'améliore sa résistance à la chaleur ou autres ;
- selon le paragraphe précédent, le revêtement est réfléchissant ; ainsi, les rayons lumineux traversant les cavités sont réfléchis par le revêtement réfléchissant de manière à suivre un sens d'émission de lumière défini; il y a donc moins de perte des rayons lumineux en sortant des cavités ;
- de manière optionnelle et non limitative, chaque cavité traversante présente une profondeur comprise entre 5 mm et 75 mm;
- les sources de lumière présentent un agencement et des connexions dans le dispositif lumineux leur permettant d'être pilotées indépendamment l'une de l'autre ; ainsi, cela permet d'enrichir les possibilités d'allumage du dispositif lumineux ; notamment, il est possible au moyen d'un dispositif de pilotage de réaliser différents manières d'allumer les sources de lumière, ce qui est très apprécié pour des « scénarios d'accueil » ; en effet, afin de satisfaire davantage les utilisateurs, certains fabricants proposent un « scénario d'accueil », ou « welcome scénario » en anglais, quand ils démarrent le véhicule ; ce scénario peut consister à faire clignoter plusieurs fois les dispositifs lumineux, ou à allumer séquentiellement pendant une courte durée tous les dispositifs lumineux du véhicule ; lorsque chaque cavité reçoit au moins une source de lumière et que ces sources sont gérées par le dispositif de pilotage, on peut régler l'éclairage de chacune des cavités, obturée ou non obturée par le masque, de sorte à produire une séquence d'éclairage adaptée pour un « scénario d'accueil » ;
- les sources de lumière sont aptes à être réglées en intensité, notamment de manière indépendantes l'une de l'autre ; ainsi, il est possible au moyen d'un dispositif de pilotage de non seulement d'éteindre ou d'allumer la source de lumière mais aussi de régler de l'intensité, et/ou la couleur de chaque source de lumière ; lorsque chaque cavité reçoit au moins une source de lumière, on peut piloter les sources de lumières de manière à ce que chaque cavité traversante soit allumée avec l'intensité et la couleur désirée pour chaque cavité ;
- les cavités traversantes sont réalisées dans une base de la pièce de segmentation ; le masque présente un contour de forme semblable à celui des bords périphériques de la base ; par ailleurs, le masque s'enchâsse dans les bords périphériques de manière à couvrir toute une face avant de la base ;
- selon l'alinéa précédent, chaque bord périphérique de la base présente un épaulement contre lequel la bordure du masque vient en butée en vue d'obtenir un parfait alignement du masque vis-à-vis de la pièce de segmentation ;
- la pièce de segmentation comprend un moyen de positionnement logé dans une portion courbée d'un bord latéral du masque et en contact avec le masque ; le moyen de positionnement peut être une butée, notamment cylindrique.

L'invention concerne en outre un procédé d'assemblage d'un dispositif lumineux selon l'invention.

Selon l'invention, le procédé comprend les étapes de :
- présenter un dispositif lumineux de véhicule comprenant une pièce de segmentation avec un nombre donné et un agencement donné des cavités traversantes,
- choisir un masque parmi une pluralité de masques comprenant chacun un nombre et un agencement de zones ajourées différents,
- monter le masque choisi sur la pièce de segmentation.

D'autres caractéristiques et avantages innovants ressortiront de la description ci-après, fournie à titre indicatif et nullement limitatif, en référence aux dessins annexés, dans lesquels :
- la figure 1 représente, de manière schématique, une vue éclatée en perspective d'un dispositif lumineux selon un exemple de réalisation de l'invention ;
- la figure 2 représente, de manière schématique, une vue de face d'une pièce de segmentation faisant partie du dispositif lumineux de la figure 1.

Sauf indication contraire, dans la présente description, les termes « avant », « arrière », « inférieur », « supérieur », « amont » et « aval » se réfèrent au sens d'émission de lumière hors du dispositif lumineux correspondant. Par ailleurs, les termes « horizontal », « vertical » ou « transversal » sont définis par rapport à l'orientation du dispositif lumineux une fois qu'il est monté dans le véhicule.

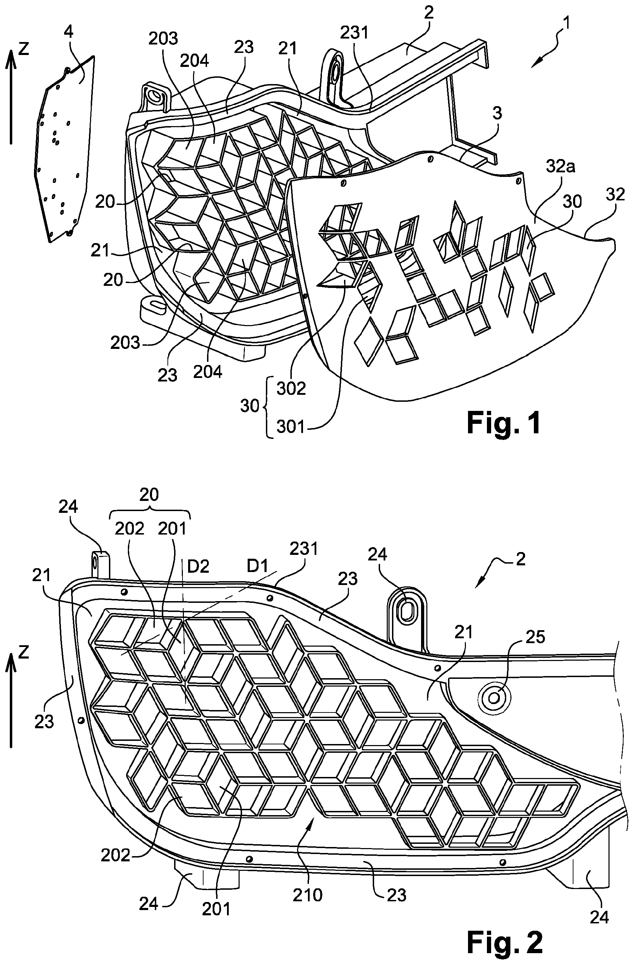

En référence à la figure 1, un dispositif lumineux 1 comprend une pièce de segmentation 2, un masque 3 et plusieurs cartes de circuit imprimé 4. A noter qu'une seule carte de circuit imprimé 4 est illustrée sur la figure 1 pour un souci de clarté.

Les cartes de circuit imprimé 4 sont fixées à l'arrière de la pièce de segmentation 2 tandis que le masque 3 est fixé à l'avant de la même pièce. Les cartes de circuit imprimé 4 sont reliées à un dispositif de pilotage (non illustré) qui est capable de contrôler, piloter et alimenter un ou plusieurs composants électroniques. Le dispositif de pilotage est encore appelé « driver » en anglais.

Le dispositif de pilotage peut être monté dans ou sur le dispositif lumineux. Par exemple, le dispositif de pilotage peut être monté sur la carte de circuit imprimé 4 portant les sources de lumière.

Alternativement, le dispositif de pilotage peut être agencé dans le véhicule à distance du dispositif lumineux.

La pièce de segmentation 2 comprend plusieurs cavités traversantes 20 disposées les unes à côté des autres. Dans l'exemple illustré, chaque cavité traversante 20 présente la forme d'un losange. En fonction de l'orientation des cavités traversantes 20, celles-ci sont divisées en deux groupes : un premier groupe 201 dans lequel la forme de losange comporte une diagonale parallèle à la verticale, illustrée par un axe Z sur les figures 1 et 2, et un deuxième groupe 202 dans lequel la forme de losange les deux diagonales sont inclinées par rapport à la verticale.

Bien entendu, dans un autre exemple de réalisation, les cavités traversantes peuvent avoir d'autres formes et orientations.

Dans cet exemple, chaque cavité traversante 20 présente une profondeur s'étendant de l'arrière vers l'avant de l'ordre de 50 mm. Les cavités traversantes 20 font saillie vers l'avant par rapport à une base 21 de la pièce de segmentation 2. Cette base 21 est entourée par des bords périphériques 23 dépassant la face avant 210 de la base 21.

La pièce de segmentation 2 comprend en outre des moyens de fixation 24 à un boîtier (non illustré) destiné à être installé à un endroit dédié au dispositif lumineux dans un véhicule. Ce boîtier peut être situé à l'avant ou à l'arrière suivant la fonction lumineuse réalisée par le dispositif lumineux 1, ou encore dans l'habitacle du véhicule.

Dans l'exemple illustré, la pièce de segmentation 2 est réalisée en matière plastique par un procédé d'injection. La pièce de segmentation peut être réalisée à partir d'une autre matière, par exemple de matière composite pour une bonne résistance aux chocs.

La carte de circuit imprimé 4 représentée sur la figure 1 porte une pluralité de sources de lumière (non illustrées). La source de lumière peut comprendre au moins une diode électroluminescente (DEL en abrégé).

Les sources de lumière sont agencées sur la carte de circuit imprimé 4 de sorte qu'une fois cette carte fixée à la pièce de segmentation 2, au moins une source de lumière est disposée en face d'une cavité traversante 20 correspondante. Dans ce cas, on dit que chaque cavité traversante 20 reçoit directement la lumière d'au moins une source de lumière. Chaque source de lumière est constituée d'une ou plusieurs DELs, par exemple de deux DELs, émettant de la lumière vers une cavité traversante correspondante.

Dans un autre exemple, chaque cavité traversante 20 peut recevoir de la lumière à partir d'un guide de lumière. Celui-ci est positionné par rapport aux sources de lumière de sorte que la lumière émise soit bien collectée et guidée jusqu'à la cavité correspondante. Selon cette configuration, les sources de lumières peuvent se situer loin de la pièce de segmentation.

Le masque 3 est installé à l'avant de la pièce de segmentation 2. Dans l'exemple illustré, le masque 3 est vissé à la pièce de segmentation 2 mais d'autres moyens de fixation peuvent être envisagés.

La distance entre le masque 3 et la pièce de segmentation 2 est par exemple de l'ordre de 2 mm. De préférence, cette valeur est dans une fourchette entre 1,5 mm et 2,5 mm pour assurer une bonne distinction des cavités traversantes 20 des unes des autres lorsque les sources de lumière sont allumées. Une telle distance permet également d'éviter les fuites à travers l'espace entre le masque 3 et la pièce de segmentation 2 car une telle fuite risque de nuire à l'esthétique du dispositif lumineux 1 quand il est allumé.

Le masque 3 présente un contour de forme semblable au contour de la base 21. Dans l'exemple illustré, puisque la base 21 est entourée des bords périphériques 23, le masque 3 a également un contour de forme semblable à celui des bords 23. Ici, le masque 3 s'enchâsse dans les bords 23 de manière à couvrir toute la face avant 210 de la base 21 quand le masque 3 est fixé sur la pièce de segmentation 2.

Chaque bord 23 présente en outre un épaulement 231 contre lequel la bordure du masque 3 vient en butée. L'épaulement 231 permet de bien positionner le masque 3 par rapport à la pièce segmentation. De cette manière, on obtient un parfait alignement des cavités traversantes avec des zones ajourées correspondantes.

Alternativement ou cumulativement au paragraphe précédent, la pièce de segmentation 2 peut comprendre d'autres moyens de positionnement. Dans l'exemple illustré, sur la droite de la pièce de segmentation 2, il y a un logement 25 qui est conçu pour recevoir un moyen de positionnement, ici une butée cylindrique. Ici, on entend par « droite » la droite de la figure 2 telle qu'elle est représentée. La butée est agencée de manière à ce que lorsque le masque 3 vient se fixer sur la pièce de segmentation 2, la butée vienne se loger dans une portion courbée 32a d'un bord latéral droit 32 du masque 3 et soit en contact avec le masque.

Des zones ajourées 30 sont réalisées dans le masque 3 de manière à ce que lorsque le masque 3 est fixé sur la pièce de segmentation 2, chaque zone ajourée 30 soit en vis-à-vis d'une cavité traversante 20 correspondante.

Selon l'invention, comme ici, chaque zone ajourée peut avoir la même forme et la même orientation que celles de la cavité traversante 20 correspondante. Ici, on a des zones ajourées 30 en losange dont la diagonale est parallèle 301 ou inclinée 302 par rapport à la verticale.

De manière optionnelle, chaque zone ajourée 30 est couverte d'un élément transparent, c'est-à-dire un élément laissant passer de la lumière et permettant de distinguer clairement l'objet vu à travers cet élément. Par exemple, l'élément transparent est une pièce en polyméthacrylate de méthyle (PMMA) ou Plexiglas^{®}. Alternativement, un deuxième masque transparent d'aspect lisse peut être plaqué sur le masque diffusant sombre.

Dans l'exemple illustré, le masque 3 est réalisé à partir d'un matériau laissant passer de 5 à 20% de lumière. De plus, ce matériau est diffusant et translucide. Notamment, le matériau diffusant répand de la lumière de manière uniforme pour un observateur. Par matériau translucide, on entend un matériau qui laisse passer les rayons lumineux mais ne permet pas de distinguer nettement les contours de l'objet vu à travers ce matériau.

Par ailleurs, le masque peut avoir une couleur sombre ou foncée. Notamment dans cet exemple, le masque 3 est de couleur noire. Ainsi, grâce à la teinte sombre ou noire du masque, seules les cavités en face des zones ajourées, dites cavités non-obturées 203, sont visibles à partir de l'extérieur, alors que les cavités obturées 204 par le masque ne le sont pas. De cette manière, en état éteint du dispositif lumineux, celui-ci donne l'impression à l'utilisateur que seuls les endroits des cavités visibles, non-obturées 203 seront allumés et que les autres endroits, perçus noirs ou sombres, garderont le même aspect quand le dispositif lumineux sera allumé.

Lorsque le dispositif est allumé, les cavités obturées 204 sont également visibles du fait que le masque laisse passer partiellement la lumière et que chaque cavité reçoit au moins une source de lumière. Cet allumage suscite ainsi un sentiment d'étonnement chez l'utilisateur qui ne s'attend pas à voir allumé les endroits perçus noirs ou sombres du dispositif lumineux 1.

D'une manière générale, l'intensité lumineuse des cavités obturées 204 par le masque peut être plus faible que celles 203 situées en face des zones ajourées. Par exemple, les diodes électroluminescentes peuvent être de même puissance qu'elles coopèrent avec une cavité obturée 204 ou non-obturée 203.

D'une manière générale, notamment grâce à la carte de circuit imprimée 4 et au dispositif de pilotage, plusieurs scénarios d'allumage du dispositif lumineux 1 sont envisageables. Par exemple, on peut allumer les cavités traversantes non-obturées 203 ou visibles une par une et puis allumer les cavités traversantes obturées 204 toutes en même temps. Alternativement, on peut allumer toutes les cavités, non-obturées et obturées 203 et 204, l'une après l'autre dans un ordre donné, par exemple de haut en bas ou de gauche à droite du dispositif lumineux.

Pour un dispositif lumineux d'un type particulier de véhicule, par exemple des voitures citadines, un constructeur peut réaliser un boîtier standard et plusieurs pièces de segmentation ayant le même contour et les mêmes moyens de fixation destinés à coopérer avec ce boîtier standard. Les pièces de segmentation sont différentes en ce qu'elles comportent les cavités traversantes de forme différente et/ou dont l'agencement est différent. Ainsi selon les différentes gammes de ce véhicule, le constructeur pourra choisi l'une ou l'autre des pièces de segmentation.

Par ailleurs, alternativement ou cumulativement au paragraphe précédent, un constructeur peut réaliser une pièce de segmentation standard et plusieurs masques, chacun comportant un motif différent, c'est-à-dire dont l'agencement et/ou la forme des zones ajourées est différent. De cette manière, le constructeur peut adapter la configuration du dispositif lumineux selon une famille, encore appelé sous-gamme, d'un type donné de véhicule afin de donner une signature propre à cette famille.

Le constructeur peut également proposer à un acheteur de choisir le masque qui lui plaît parmi un ensemble de masques proposés sur catalogue lors de la commande du véhicule.

## Revendications

1. Dispositif lumineux (1) de véhicule automobile, ledit dispositif (1) comprenant :
- une pièce de segmentation (2) comportant plusieurs cavités traversantes (20) ;
- plusieurs sources de lumière en amont de la pièce de segmentation (2) ;
- un masque (3) obturant au moins une cavité traversante (20) de la pièce de segmentation (2), ledit masque (2) étant apte à être traversé partiellement par la lumière et comportant au moins une zone ajourée (30) ; et
le masque (3) et la pièce de segmentation (2) étant agencés l'un par rapport à l'autre de manière à ce que la zone ajourée (30) soit disposée en face d'au moins une cavité traversante (20) ; et
ledit dispositif lumineux (1) étant agencé de manière à ce que chaque cavité traversante (20) reçoive directement ou indirectement la lumière d'au moins une source de lumière distincte.

2. Dispositif lumineux (1) selon la revendication 1 **caractérisé en ce que** le masque (2) est réalisé à partir d'un matériau diffusant et translucide.

3. Dispositif lumineux (1) selon l'une des revendications 1 à 2 **caractérisé en ce que** le masque (3) est réalisé à partir d'un matériau laissant passer de 5 à 20% de la lumière qui l'atteint.

4. Dispositif lumineux (1) selon l'une des revendications précédentes, **caractérisé en ce qu'**un élément transparent laissant passer un pourcentage de lumière supérieur à celui du masque (3), couvre la zone ajourée (30) du masque.

5. Dispositif lumineux (1) selon l'une des revendications précédentes, **caractérisé en ce que** chaque cavité traversante (20) est agencée en vis-à-vis d'au moins une source de lumière distincte.

6. Dispositif lumineux (1) selon l'une des revendications précédentes, **caractérisé en ce que** la pièce de segmentation (2) et le masque (3) sont espacés l'un de l'autre.

7. Dispositif lumineux (1) selon la revendication 6, **caractérisée en ce que** l'espace entre la pièce de segmentation (2) et le masque (3) est comprise entre 1,5 mm et 2,5 mm.

8. Dispositif lumineux (1) selon l'une des revendications précédentes, **caractérisé en ce que** la pièce de segmentation (2) est couverte d'un revêtement réfléchissant.

9. Dispositif lumineux (1) selon l'une des revendications précédentes, **caractérisé en ce que** les sources de lumière présentent un agencement et des connexions dans le dispositif lumineux leur permettant d'être pilotées indépendamment l'une de l'autre .

10. Dispositif lumineux (1) selon l'une des revendications précédentes, **caractérisé en ce qu'**il comprend au moins un dispositif de pilotage des sources de lumière.

11. Dispositif lumineux (1) selon l'une des revendications précédentes, **caractérisé en ce que** les cavités traversantes (20) sont réalisées dans une base (21) de la pièce de segmentation (2), le masque (3) présentant un contour de forme semblable à celui des bords périphériques (23) de la base (21) et s'enchâssant dans les bords périphériques (23) de manière à couvrir toute une face avant (210) de la base (21).

12. Dispositif lumineux (1) selon l'une des revendications précédentes, **caractérisé en ce que** la pièce de segmentation (2) comprend un moyen de positionnement logé dans une portion courbée (32a) d'un bord latéral (32) du masque (3) et en contact avec le masque (3).

13. Procédé d'assemblage d'un dispositif lumineux selon l'une des revendications 1 à 12, comprenant les étapes de :
- présenter un dispositif lumineux de véhicule automobile selon l'une des revendications 1 à 12, dont la pièce de segmentation a un nombre donné et un agencement donné des cavités traversantes (30),
- choisir un masque parmi une pluralité de masques comprenant chacun un nombre et un agencement de zones ajourées différents,
- monter le masque choisi sur la pièce de segmentation (2).

## Patentansprüche

1. Beleuchtungsvorrichtung (1) eines Kraftfahrzeugs, wobei die Vorrichtung (1) umfasst:
- ein Segmentierungsteil (2), das mehrere durchgehende Hohlräume (20) umfasst;
- mehrere Lichtquellen, die dem Segmentierungsteil (2) vorgelagert sind;
- eine Maske (3), die wenigstens einen durchgehenden Hohlraum (20) des Segmentierungsteils (2) verschließt, wobei die Maske (2) wenigstens teilweise vom Licht durchquert werden kann und wenigstens einen durchbrochenen Bereich (30) aufweist; und
wobei die Maske (3) und das Segmentierungsteil (2) relativ zueinander so angeordnet sind, dass der durchbrochene Bereich (30) gegenüber wenigstens einem durchgehenden Hohlraum (20) angeordnet ist; und
wobei die Beleuchtungsvorrichtung (1) so gestaltet ist, dass jeder durchgehende Hohlraum (20) direkt oder indirekt das Licht wenigstens einer separaten Lichtquelle empfängt.

2. Beleuchtungsvorrichtung (1) nach Anspruch 1, **dadurch gekennzeichnet, dass** die Maske (2) aus einem lichtstreuenden und durchscheinenden Material hergestellt ist.

3. Beleuchtungsvorrichtung (1) nach einem der Ansprüche 1 bis 2, **dadurch gekennzeichnet, dass** die Maske (3) aus einem Material hergestellt ist, das 5 bis 20 % des Lichtes durchlässt, welches sie erreicht.

4. Beleuchtungsvorrichtung (1) nach einem der vorhergehenden Ansprüche, **dadurch gekennzeichnet, dass** ein lichtdurchlässiges Element, das einen Prozentsatz des Lichtes durchlässt, der größer als derjenige der Maske (3) ist, den durchbrochenen Bereich (30) der Maske bedeckt.

5. Beleuchtungsvorrichtung (1) nach einem der vorhergehenden Ansprüche, **dadurch gekennzeichnet, dass** jeder durchgehende Hohlraum (20) gegenüber wenigstens einer separaten Lichtquelle angeordnet ist.

6. Beleuchtungsvorrichtung (1) nach einem der vorhergehenden Ansprüche, **dadurch gekennzeichnet, dass** das Segmentierungsteil (2) und die Maske (3) voneinander beabstandet sind.

7. Beleuchtungsvorrichtung (1) nach Anspruch 6, **dadurch gekennzeichnet, dass** der Abstand zwischen dem Segmentierungsteil (2) und der Maske (3) zwischen 1,5 mm und 2,5 mm liegt.

8. Beleuchtungsvorrichtung (1) nach einem der vorhergehenden Ansprüche, **dadurch gekennzeichnet, dass** das Segmentierungsteil (2) mit einer reflektierenden Beschichtung bedeckt ist.

9. Beleuchtungsvorrichtung (1) nach einem der vorhergehenden Ansprüche, **dadurch gekennzeichnet, dass** die Lichtquellen eine Anordnung und Verbindungen in der Beleuchtungsvorrichtung aufweisen, die es ihnen ermöglichen, unabhängig voneinander gesteuert zu werden.

10. Beleuchtungsvorrichtung (1) nach einem der vorhergehenden Ansprüche, **dadurch gekennzeichnet, dass** sie wenigstens eine Vorrichtung zur Steuerung der Lichtquellen umfasst.

11. Beleuchtungsvorrichtung (1) nach einem der vorhergehenden Ansprüche, **dadurch gekennzeichnet, dass** die durchgehenden Hohlräume (20) in einem Basisteil (21) des Segmentierungsteils (2) ausgebildet sind, wobei die Maske (3) eine Formkontur aufweist, die derjenigen der Umfangsränder (23) des Basisteils (21) ähnlich ist und sich in die Umfangsränder (23) einfügt, so dass sie eine gesamte Vorderseite (210) des Basisteils (21) bedeckt.

12. Beleuchtungsvorrichtung (1) nach einem der vorhergehenden Ansprüche, **dadurch gekennzeichnet, dass** das Segmentierungsteil (2) ein Positionierungsmittel umfasst, das in einem gekrümmten Abschnitt (32a) eines seitlichen Randes (32) der Maske (3) aufgenommen ist und sich mit der Maske (3) in Kontakt befindet.

13. Verfahren zum Zusammenbau einer Beleuchtungsvorrichtung nach einem der Ansprüche 1 bis 12, welches die folgenden erreiche umfasst:
- Bereitstellen einer Beleuchtungsvorrichtung für ein Kraftfahrzeug nach einem der Ansprüche 1 bis 12, deren Segmentierungsteil eine gegebene Anzahl und eine gegebene Anordnung der durchgehenden Hohlräume (30) aufweist,
- Wählen einer Maske aus mehreren Masken, die jeweils eine andere Anzahl und Anordnung von durchbrochenen Bereichen umfassen,
- Anbringen der gewählten Maske am Segmentierungsteil (2).

## Claims

1. Luminous motor-vehicle device (1), said device (1) comprising:
- a segmenting part (2) including a plurality of through-cavities (20);
- a plurality of light sources upstream of the segmenting part (2);
- a mask (3) that blocks at least one through-cavity (20) of the segmenting part (2), said mask (3) being able to be partially passed through by light and including at least one apertured zone (30); and
the mask (3) and the segmenting part (2) being arranged with respect to each other so that the apertured zone (30) is placed facing at least one through-cavity (20)
said luminous device (1) being arranged so that each through-cavity (20) directly or indirectly receives light from at least one separate light source.

2. Luminous device (1) according to Claim 1, **characterized in that** the mask (3) is made from a scattering and translucent material.

3. Luminous device (1) according to one of Claims 1 to 2, **characterized in that** the mask (3) is made from a material that lets pass 5 to 20% of the light that reaches it.

4. Luminous device (1) according to one of the preceding claims, **characterized in that** a transparent element that lets pass a percentage of light higher than that of the mask (3) covers the apertured zone (30) of the mask.

5. Luminous device (1) according to one of the preceding claims, **characterized in that** each through-cavity (20) is arranged facing at least one separate light source.

6. Luminous device (1) according to one of the preceding claims, **characterized in that** the segmenting part (2) and the mask (3) are spaced apart from each other.

7. Luminous device (1) according to Claim 6, **characterized in that** the space between the segmenting part (2) and the mask (3) is comprised between 1.5 mm and 2.5 mm.

8. Luminous device (1) according to one of the preceding claims, **characterized in that** the segmenting part (2) is covered with a reflective coating.

9. Luminous device (1) according to one of the preceding claims, **characterized in that** the light sources have an arrangement and connections in the luminous device allowing them to be driven independently of one another.

10. Luminous device (1) according to one of the preceding claims, **characterized in that** it comprises at least one device for driving the light sources.

11. Luminous device (1) according to one of the preceding claims, **characterized in that** the through-cavities (20) are produced in a base (21) of the segmenting part (2), the mask (3) having an outline of similar shape to that of the peripheral edges (23) of the base (21) and being set into the peripheral edges (23) so as to cover all of a front face (210) of the base (21).

12. Luminous device (1) according to one of the preceding claims, **characterized in that** the segmenting part (2) comprises a positioning means housed in a curved section (32a) of a lateral edge (32) of the mask (3) and in contact with the mask (3).

13. Process for assembling a luminous device according to one of Claims 1 to 12, comprising the steps of:
- providing a luminous motor-vehicle vehicle device according to one of claims 1 to 12, whose segmenting part has a given number and a given arrangement of through-cavities (20),
- choosing a mask from a plurality of masks each comprising a different number and a different arrangement of apertured zones,
- mounting the chosen mask on the segmenting part (2).
